# EUROPEAN PATENT SPECIFICATION

(11) **EP 4 393 662 B1**
(45) Date of publication and mention of the grant of the patent: **11.02.2026**
(21) Application number: 22861041.6
(22) Date of filing: 27.07.2022
(51) Int. Cl.: B25J 19/06, G08B 29/02, H04M 11/00, H04Q 9/00, G06N 20/00, B25J 9/16, G06V 20/52

(54) **REMOTE MONITORING SYSTEM, ANOMALY DETECTION SYSTEM, REMOTE MONITORING METHOD, AND PROGRAM**
FERNÜBERWACHUNGSSYSTEM, ANOMALIEDETEKTIONSSYSTEM, FERNÜBERWACHUNGSVERFAHREN UND PROGRAMM
SYSTÈME DE SURVEILLANCE À DISTANCE, SYSTÈME DE DÉTECTION D'ANOMALIE, PROCÉDÉ DE SURVEILLANCE À DISTANCE ET PROGRAMME

(30) Priority: 26.08.2021 JP 2021138371
(43) Date of publication of application: 03.07.2024
(73) Proprietor: Panasonic Intellectual Property Corporation of America, Torrance, CA 90504 (US)
(72) Inventor: IIO, Kentaro, Kadoma-shi Osaka 571-0057 (JP); HIRAMOTO, Takuji, Kadoma-shi Osaka 571-0057 (JP); OBA, Tatsumi, Kadoma-shi Osaka 571-0057 (JP)
(74) Representative: Grünecker Patent- und Rechtsanwälte PartG mbB
(86) International application number: PCT/JP2022/028866
(87) International publication number: WO 2023/026750

(56) References cited:
- JP-A- 2003 295 951
- JP-A- 2018 130 793
- JP-A- 2019 025 572
- JP-A- 2021 039 687
- KR-A- 20100 056 178
- US-A1- 2018 232 593

## Description

### [Technical Field]

The present disclosure relates to a remote monitoring system, an anomaly detection system, a remote monitoring method, and a program.

### [Background Art]

Advancements in artificial intelligence (Al) and communication technologies in recent years have enabled robots to autonomously carry out more sophisticated activities. Thus, there is an expectation that robots will fill the labor shortage that may arise in the near future due to a decrease in the workforce.

To operate such robots efficiently, centralized management through remote control or remote monitoring is indispensable. However, if such centralized management has a vulnerability, a robot can be controlled maliciously by an attacker. In one conceivable case, an attacker who has intruded into a robot may alter its state to be sent to a remote monitoring system and may conceal such an alteration, so that a person who monitors the robot fails to notice the anomaly.

To detect such an anomaly in, for example, an in-vehicle network, an anomaly detecting method has been contemplated that detects an alteration by comparing the travel state in the network and the travel state estimated based on the peripheral information obtained by, for example, an onboard camera (see, for example, Patent Literature (PTL) 1).

Patent Application JP 2003 295951 A relates to patrolling of an autonomous security robot that is monitored by a camera, and in particular to correcting an estimated position of the robot. The robot is monitored by a camera, which takes images of the robot as it moves. Based on the captured images, a control computer acquires the position of the robot. The robot estimates its own current position. Based on the position of the robot in the captured image, a coordinate calculation unit calculates the actual position. A correction unit corrects the estimated position using the calculated actual position.

Patent Application US 2018/232593 A1 relates to monitoring the movement of robots and workers within their respective areas, and in particular to position detection to detect intrusion of a worker into the robot area.

Patent Application JP 2021 039687 A relates to video processing in autonomous robots, moving in changing recognition environments.

### [Citation List]

### [Patent Literature]

[PTL 1]
International Patent Publication No. WO2019/216306

### [Summary of Invention]

### [Technical Problem]

With the technique disclosed in PTL 1, however, if the attacker has altered the peripheral information as well, the fact that the attacker has altered the state of the monitored target, or the robot, cannot be detected.

Accordingly, the present disclosure provides a remote monitoring system, an anomaly detection system, a remote monitoring method, and a program that, even if an attacker has altered peripheral information, can detect the fact that the attacker has altered a state of a monitored target.

### [Solution to Problem]

A remote monitoring system according to one aspect of the present disclosure is a remote monitoring system that detects an anomaly in a state of a monitored target that operates autonomously, and the remote monitoring system includes: a first obtainer that obtains state information from the monitored target, the state information indicating a state of the monitored target; a second obtainer that obtains first sensing information from a first sensing device, the first sensing device being provided outside the monitored target and performing sensing of the monitored target, the first sensing information indicating a result of the sensing of the monitored target; a state estimator that estimates a first state based on the first sensing information that the second obtainer obtains, the first state being the state of the monitored target; a state comparer that compares the state information that the first obtainer obtains with estimated state information that is based on the first state of the monitored target that the state estimator estimates; and a notifier that notifies a monitor of the remote monitoring system of an occurrence of an anomaly, based on a comparison result of the state comparer.

An anomaly detection system according to one aspect of the present disclosure is an anomaly detection system that detects an anomaly in a state of a monitored target that operates autonomously, and the anomaly detection system includes: a first obtainer that obtains state information from the monitored target, the state information indicating a state of the monitored target; a second obtainer that obtains sensing information from a sensing device, the sensing device being provided outside the monitored target and performing sensing of the monitored target, the sensing information indicating a result of the sensing of the monitored target; a state estimator that estimates the state of the monitored target based on the sensing information that the second obtainer obtains; and a state comparer that compares the state information that the first obtainer obtains with estimated state information that is based on the state of the monitored target that the state estimator estimates.

A remote monitoring method according to one aspect of the present disclosure is a remote monitoring method of detecting an anomaly in a state of a monitored target that operates autonomously, and the remote monitoring method includes: obtaining state information from the monitored target, the state information indicating a state of the monitored target; obtaining sensing information from a sensing device, the sensing device being provided outside the monitored target and performing sensing of the monitored target, the sensing information indicating a result of the sensing of the monitored target; estimating the state of the monitored target based on the sensing information obtained; comparing the state information obtained with estimated state information that is based on the state estimated of the monitored target; and notifying a monitor of a remote monitoring system of an occurrence of an anomaly, based on a comparison result of the state information and the estimated state information.

A program according to one aspect of the present disclosure is a program for causing a computer to execute the remote monitoring method above.

### [Advantageous Effects of Invention]

With the remote monitoring system and so forth according to some aspects of the present disclosure, even if an attacker has altered peripheral information, the fact that the attacker has altered a state of a monitored target can be detected.

### [Brief Description of Drawings]

[FIG. 1]

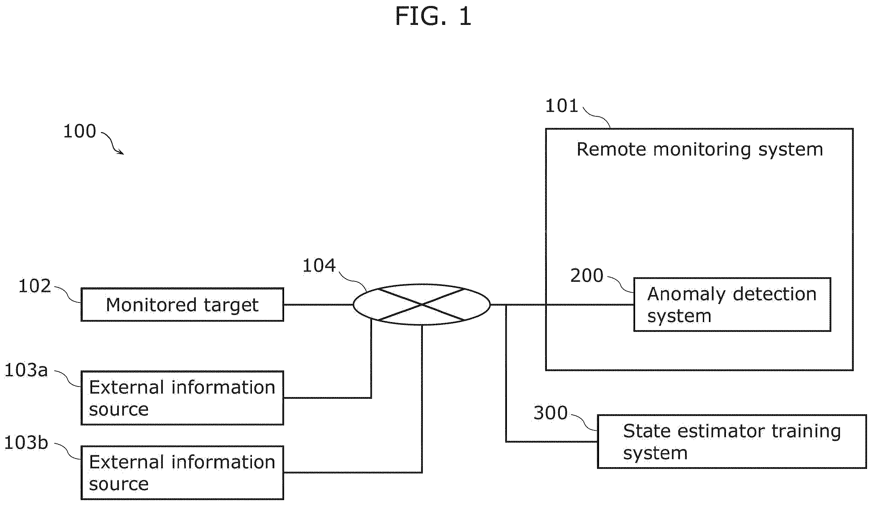

   FIG. 1 is a diagram showing a configuration of a monitoring system according to Embodiment 1.
[FIG. 2]

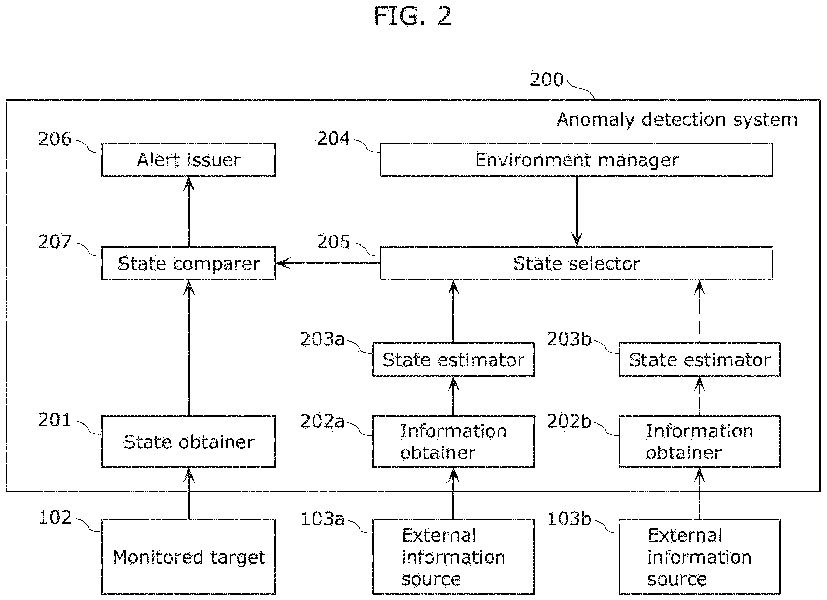

   FIG. 2 is a block diagram showing a functional configuration of an anomaly detection system according to Embodiment 1.
[FIG. 3]

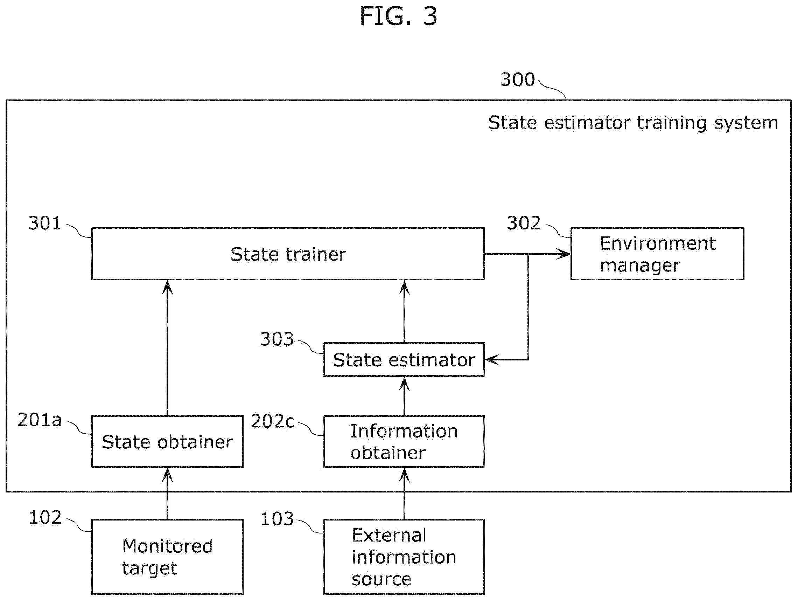

   FIG. 3 is a block diagram showing a functional configuration of a state estimator training system according to Embodiment 1.
[FIG. 4]

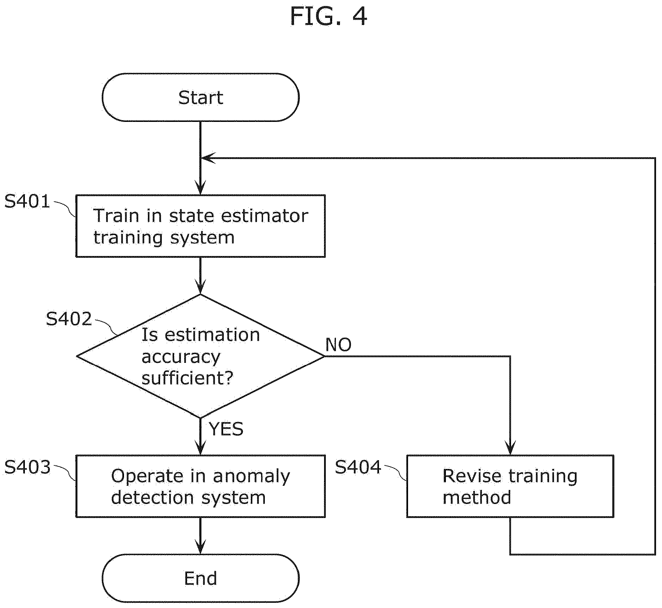

   FIG. 4 is a flowchart showing a training process in the state estimator training system according to Embodiment 1.
[FIG. 5]

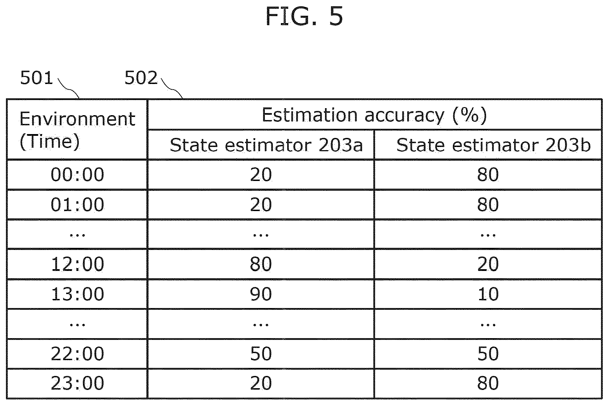

   FIG. 5 is a diagram showing one example of an environmental information table that an environment manager of the state estimator training system according to Embodiment 1 manages.
[FIG. 6A]

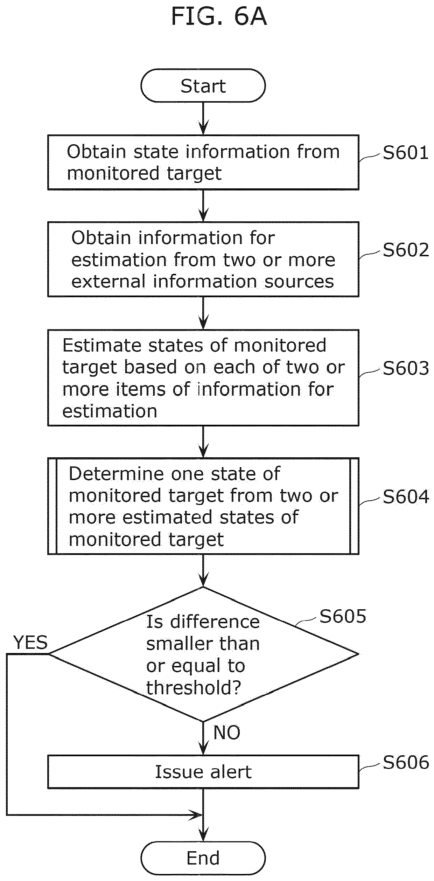

   FIG. 6A is a flowchart showing a process performed by a remote monitoring system according to Embodiment 1.
[FIG. 6B]

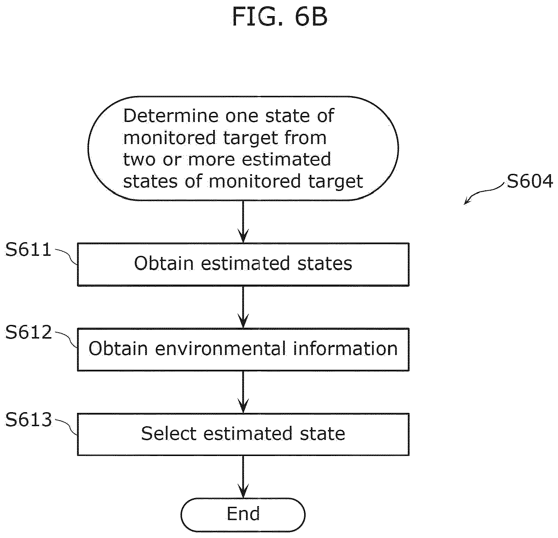

   FIG. 6B is a flowchart showing a process performed by a state selector according to Embodiment 1.
[FIG. 7]

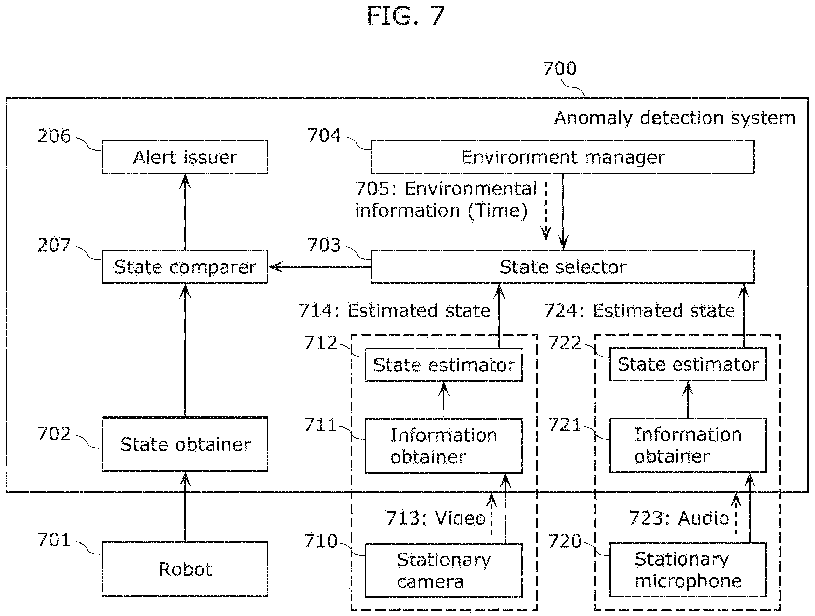

   FIG. 7 is a block diagram showing a functional configuration of an anomaly detection system according to Embodiment 2.
[FIG. 8]

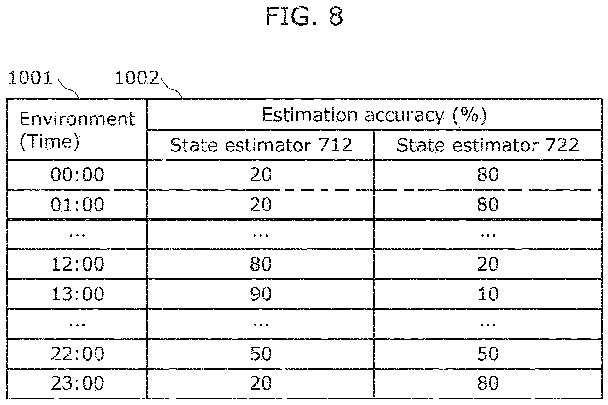

   FIG. 8 is a diagram showing one example of an environmental information table that an environment manager of the anomaly detection system according to Embodiment 2 manages.
[FIG. 9]

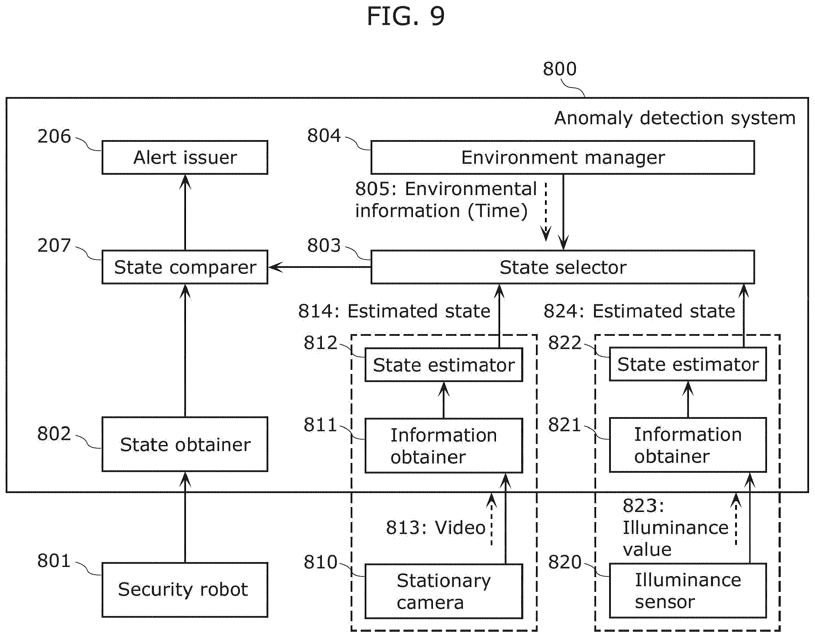

   FIG. 9 is a block diagram showing a functional configuration of an anomaly detection system according to Embodiment 3.
[FIG. 10]

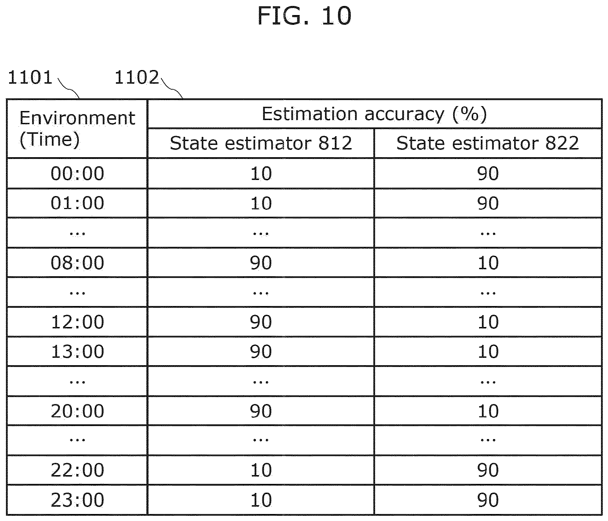

   FIG. 10 is a diagram showing one example of an environmental information table that an environment manager of the anomaly detection system according to Embodiment 3 manages.
[FIG. 11]

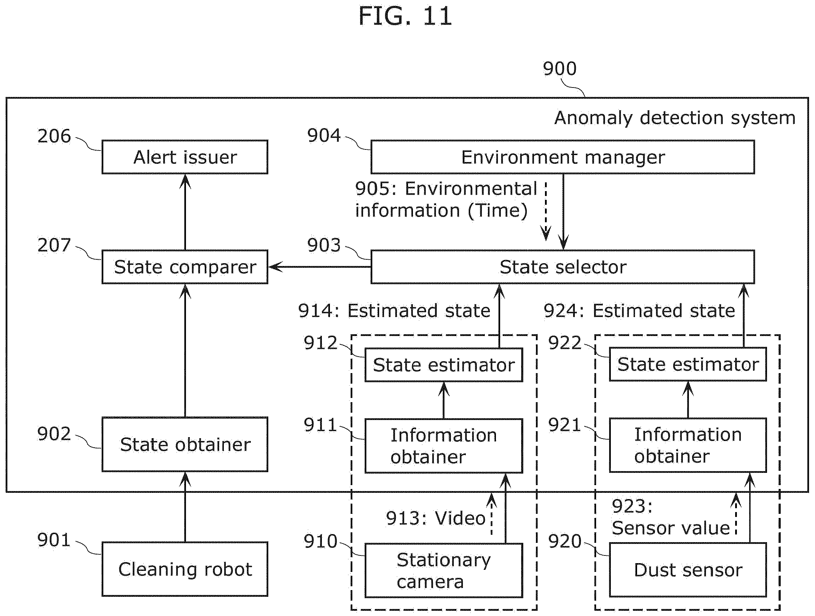

   FIG. 11 is a block diagram showing a functional configuration of an anomaly detection system according to Embodiment 4.
[FIG. 12]

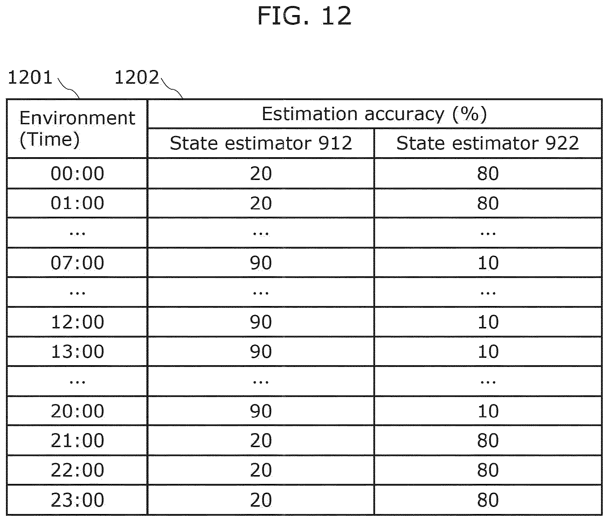

   FIG. 12 is a diagram showing one example of an environmental information table that an environment manager of the anomaly detection system according to Embodiment 4 manages.

### [Description of Embodiments]

### (Underlying Knowledge Forming Basis of the Present Disclosure)

Conventional robots that operate autonomously, such as cleaning robots, are mainly those which carry out limited operations within a limited space. Robots, such as security robots or delivery robots, that have appeared in recent years, however, carry out more sophisticated operations (e.g., more sophisticated tasks) in a larger space.

With the expansion of activity ranges of robots arises the need to monitor a large number of robots that are scattered over various locations, and thus functions for remotely and centrally controlling and monitoring robots are becoming more important.

Meanwhile, for the purpose of controlling and monitoring a robot remotely, the robot may be provided with a function for connecting to a communication network, and that function may allow an attacker to access the robot remotely. This leads to a concern that, if the robot is controlled maliciously, damage may be caused, for example, by a leak of information from within a facility or by a malicious operation on equipment within a facility.

A measure contemplated to prevent such damage is for a remote monitoring system to monitor a robot by communicating with the robot to find any anomaly in the state of the robot. However, if an attacker has altered the peripheral information in addition to the state of the robot to be sent to the remote monitoring system, the remote monitoring system cannot detect the fact that the state of that robot has been altered. Herein, the state of a robot is, for example, the position of the robot, but this is not a limiting example.

Accordingly, the inventors of the present application have diligently looked into remote monitoring systems and so forth that, even if an attacker has altered the peripheral information, can detect the fact that the attacker has altered a state of a monitored target, or a robot, and have devised a remote monitoring system and so forth described hereinafter. For example, according to the present disclosure, information obtained by sensing a monitored target is obtained from an outside information source (an external information source) that is independent from the monitored target, and the state of the monitored target estimated based on the obtained information is compared with a state obtained from the monitored target, such as a robot. Thus, an alteration made to the state of the monitored target by an attacker is detected, and an alert is issued to a monitor. With this configuration, the monitor that has received the alert can promptly take necessary measures to limit any damage to minimum.

A remote monitoring system according to one aspect of the present disclosure is a remote monitoring system that detects an anomaly in a state of a monitored target that operates autonomously, and the remote monitoring system includes: a first obtainer that obtains state information from the monitored target, the state information indicating a state of the monitored target; a second obtainer that obtains first sensing information from a first sensing device, the first sensing device being provided outside the monitored target and performing sensing of the monitored target, the first sensing information indicating a result of the sensing of the monitored target; a state estimator that estimates a first state based on the first sensing information that the second obtainer obtains, the first state being the state of the monitored target; a state comparer that compares the state information that the first obtainer obtains with estimated state information that is based on the first state of the monitored target that the state estimator estimates; and a notifier that notifies a monitor of the remote monitoring system of an occurrence of an anomaly, based on a comparison result of the state comparer.

With this configuration, the remote monitoring system can detect an anomaly in the state information (an alteration made to the state information) sent from the monitored target, with the use of the first sensing information in the first sensing device provided outside the monitored target. In other words, the remote monitoring system can detect an anomaly without the use of peripheral information obtained from, for example, an onboard camera provided in the monitored target. Furthermore, since the first sensing device is provided outside the monitored target, the first sensing information is information that is not altered by an attacker. Accordingly, the remote monitoring system can detect the face that an attacker has altered the state of the monitored target even if the peripheral information has been altered by the attacker.

Furthermore, for example, the second obtainer may further obtain second sensing information from a second sensing device, the second sensing information being different from the first sensing information, the second sensing device being provided outside the monitored target and performing sensing of the monitored target, the second sensing information indicating a result of the sensing of the monitored target; the state estimator may estimate a second state based on the second sensing information that the second obtainer obtains, the second state being the state of the monitored target; and the estimated state information may be information that is based further on the second state.

With this configuration, the remote monitoring system can detect an anomaly in the monitored target with the use of the two items of sensing information, and thus the remote monitoring system can detect an anomaly more accurately than it does with the use of one item of sensing information.

Furthermore, for example, the remove monitoring system may further include an environment manager that manages environmental information linking an environment in which sensing of the monitored target is performed and an estimation accuracy of a state that the state estimator estimates, and a state determiner that determines one state from between the first state and the second state with use of the environmental information that the environment manager manages, and that outputs the one state determined as the estimated state information.

With this configuration, the remote monitoring system can detect an anomaly in the monitored target with the use of the first state and the second state, and thus the remote monitoring system can detect an anomaly more accurately than it does with the use of one estimated state.

Furthermore, for example, the state determiner may select one of the first state or the second state with use of the environmental information, and output the one selected as the estimated state information.

With this configuration, the remote monitoring system can detect an anomaly more accurately by selecting a state with a higher estimation accuracy.

Furthermore, for example, the state determiner may perform a weighting operation on the first state and the second state with use of the environmental information, and output a weighted state as the estimated state information.

With this configuration, the remote monitoring system uses weighted states, and thus the remote monitoring system can take into consideration both the first state and the second state and can detect an anomaly more accurately.

Furthermore, for example, the first obtainer may obtain a current position of the monitored target as the state, the state estimator may estimate the current position of the monitored target as the first state and the second state, and the environmental information may include an estimation accuracy of the first state and the second state with respect to time.

With this configuration, the remote monitoring system can detect an anomaly in the position of the monitored target (an alteration made to the position) even if the attacker has altered the position information.

Furthermore, for example, the monitored target may be a robot, the first sensing device may include a stationary camera, and the second sensing device may include a stationary microphone.

With this configuration, the remote monitoring system uses the stationary camera and the stationary microphone as the sensing devices, and thus the remote monitoring system can effectively detect an anomaly in the position of the robot.

Furthermore, for example, the monitored target may be a robot that performs a security task, the first sensing device may include a stationary camera, and the second sensing device may include an illuminance sensor.

With this configuration, the remote monitoring system uses the stationary camera and the illuminance sensor as the sensing devices, and thus the remote monitoring system can effectively detect an anomaly in the position of the robot that performs a security task.

Furthermore, for example, the monitored target may be a robot that performs a cleaning task, the first sensing device may include a stationary camera, and the second sensing device may include a dust sensor.

With this configuration, the remote monitoring system uses the stationary camera and the dust sensor as the sensing devices, and thus the remote monitoring system can effectively detect an anomaly in the position of the robot that performs a cleaning task.

Furthermore, for example, the remote monitoring system may further include a state trainer that calculates information indicating an estimation accuracy of at least one of the first state or the second state based on the state of the monitored target that the first obtainer obtains and the at least one of the first state or the second state of the monitored target that the state estimator estimates, and that outputs the information calculated indicating the estimation accuracy to the state estimator and the environment manager.

With this configuration, the state trainer can update the machine learning model and the environmental information that the state estimator uses.

Furthermore, for example, the environment manager may determine an estimation accuracy of the state that the state estimator estimates, based on the information that is obtained from the state trainer and indicates the estimation accuracy.

With this configuration, the environmental information that the environment manager manages can be served by information corresponding to the update of the state estimator. Accordingly, in the remote monitoring system, even when the state estimator is updated, a state can be, for example, selected by the state selector with the update taken into consideration. This feature contributes to the accurate detection of the fact that an attacker has altered the state of the monitored target.

Furthermore, for example, the state trainer may output the information calculated indicating the estimation accuracy to the state estimator and the environment manager before the monitored target is put into operation.

With this configuration, the state trainer performs a training process before the monitored target is put into operation, and thus the remote monitoring system can detect the fact that the attacker has altered the state of the monitored target during operation.

Furthermore, for example, the state trainer may output the information calculated indicating the estimation accuracy to the state estimator and the environment manager while the monitored target is in operation.

With this configuration, the state trainer performs a training process while the monitored target is in operation as well, and thus the estimation accuracy of the state estimator improves.

Furthermore, for example, the remove monitoring system may further include an environment manager that manages environmental information linking an environment in which sensing of the monitored target is performed and an estimation accuracy of a state that the state estimator estimates, and the state comparer may compare the state information with the estimated state information based on the environmental information.

With this configuration, the remote monitoring system can use the environmental information for the comparison in the state comparer. In other words, the remote monitoring system can make a comparison in accordance with the environment indicated by the environmental information. Accordingly, the remote monitoring system can determine an anomaly more accurately.

An anomaly detection system according to one aspect of the present disclosure is an anomaly detection system that detects an anomaly in a state of a monitored target that operates autonomously, and the anomaly detection system includes: a first obtainer that obtains state information from the monitored target, the state information indicating a state of the monitored target; a second obtainer that obtains sensing information from a sensing device, the sensing device being provided outside the monitored target and performing sensing of the monitored target, the sensing information indicating a result of the sensing of the monitored target; a state estimator that estimates the state of the monitored target based on the sensing information that the second obtainer obtains; and a state comparer that compares the state information that the first obtainer obtains with estimated state information that is based on the state of the monitored target that the state estimator estimates.

With this configuration, the anomaly detection system can detect an anomaly in the state information (an alteration made to the state information) sent from the monitored target, with the use of the sensing information in the sensing device provided outside the monitored target. In other words, the anomaly detection system can detect an anomaly without the use of peripheral information obtained from, for example, an onboard camera provided in the monitored target. Furthermore, since the sensing device is provided outside the monitored target, the sensing information is information that is not altered by an attacker. Accordingly, the anomaly detection system can detect the fact that an attacker has altered the state of the monitored target even if the peripheral information has been altered by the attacker.

A remote monitoring method according to one aspect of the present disclosure is a remote monitoring method of detecting an anomaly in a state of a monitored target that operates autonomously, and the remote monitoring method includes: obtaining state information from the monitored target, the state information indicating a state of the monitored target; obtaining sensing information from a sensing device, the sensing device being provided outside the monitored target and performing sensing of the monitored target, the sensing information indicating a result of the sensing of the monitored target; estimating the state of the monitored target based on the sensing information obtained; comparing the state information obtained with estimated state information that is based on the state estimated of the monitored target; and notifying a monitor of a remote monitoring system of an occurrence of an anomaly, based on a comparison result of the state information and the estimated state information. Furthermore, a program according to one aspect of the present disclosure is a program for causing a computer to execute the remote monitoring method above.

With the program above, advantageous effects similar to those provided by the remote monitoring system above can be provided.

General or specific aspects of the above may be implemented in the form of a system, a method, an integrated circuit, a computer program, or a non-transitory computer readable recording medium, such as a CD-ROM, or through any desired combination of a system, a method, an integrated circuit, a computer program, and a recording medium. The program may be prestored in a recording medium or supplied to a recording medium via a wide area communication network, including the internet.

Hereinafter, some embodiments will be described in specific terms with reference to the drawings.

The embodiments described hereinafter merely illustrate some specific examples of the present disclosure. The numerical values, the shapes, the constituent elements, the steps, the orders of the steps, and so forth illustrated in the following embodiments are examples and are not intended to limit the present disclosure. Furthermore, among the constituent elements illustrated in the following embodiments, any constituent elements that are not cited in the independent claims expressing the broadest concept are to be construed as optional constituent elements. Furthermore, contents of any of the embodiments can be combined.

Furthermore, the drawings are schematic diagrams and do not necessarily provide exact depictions. Therefore, the scales and so forth, for example, do not necessarily match among the drawings. Furthermore, in the drawings, substantially identical configurations are given identical reference characters, and duplicate description thereof will be omitted or simplified.

In the present specification, expressions, such as "the same", expressing the relationships between elements as well as the numerical values and the numerical ranges are not to be construed solely in their strict senses but to be construed to encompass substantially equal ranges-for example, a difference of several percentages (e.g., around 10%).

Furthermore, in the present specification, ordinal numbers, such as "first" or "second", are used not to indicate the number or the order of constituent elements but to differentiate between constituent elements of the same type.

### [Embodiment 1]

### [1. Overall System Configuration]

FIG. 1 is a diagram showing a configuration of monitoring system 100 according to the present embodiment.

As shown in FIG. 1, monitoring system 100 includes remote monitoring system 101, monitored target 102, external information sources 103a and 103b, network 104, and state estimator training system 300.

Remote monitoring system 101 is an information processing system for detecting an anomaly in the state of monitored target 102 that is located remotely and that operates autonomously. Remote monitoring system 101 is connected to monitored target 102 and each of external information sources 103a and 103b via network 104. Remote monitoring system 101 includes anomaly detection system 200 that, with the use of information that anomaly detection system 200 has obtained from each of external information sources 103a and 103b that have performed sensing of monitored target 102, detects an anomaly in the state of monitored target 102 sent from this monitored target 102. In the following description, such information obtained from each of external information sources 103a and 103b is also referred to as sensing information or information for estimation.

Monitored target 102 is a robot that operates autonomously, and non-limiting examples of monitored target 102 include a security robot, a delivery robot, and a cleaning robot. Monitored target 102 includes a camera, a microphone, and a sensor, such as an infrared sensor or an ultrasonic wave sensor, that detects the state of monitored target 102 (e.g., its position information). Monitored target 102 transmits the state of monitored target 102 (state information indicating the state of monitored target 102), such as the video information captured by the camera, the audio information collected by the microphone, or the position information estimated with the use of the sensor, to remote monitoring system 101 via network 104.

Herein, a robot is, for example, a wheeled robot, a crawler robot, or a legged robot (including a walking robot). Furthermore, monitored target 102 is not limited to a robot and can be any mobile body that operates autonomously. Monitored target 102 may be, for example but is not limited to, a mobile body that moves autonomously (e.g., a vehicle that drives autonomously) or a flying body that flies autonomously (e.g., a drone). Furthermore, monitored target 102 may be an apparatus of which one or more of the components (e.g., an arm) move (i.e., only the one or more of the components move while monitored target 102 itself is stationary). Autonomous movement, autonomous driving, and autonomous flying are each an example of autonomous operation.

Herein, a state of monitored target 102 is, for example, the current position (the current position coordinates) of monitored target 102. Alternatively, a state of monitored target 102 may be, for example buy is not limited to, information indicating whether monitored target 102 is operating or information indicating whether a function or functions of monitored target 102 itself are in operation (e.g., whether monitored target 102 is currently cleaning). An operation of monitored target 102 includes, for example but is not limited to, a movement of monitored target 102 (the current position of monitored target 102 is changing) or a movement of one or more of the components (e.g., an arm) of monitored target 102 (only the one or more of the components are moving while the current position of monitored target 102 remains unchanged).

External information sources 103a and 103b are each a device for detecting a state of monitored target 102. External information sources 103a and 103b are installed at positions where external information sources 103a and 103b can detect a state of monitored target 102, and non-limiting examples of external information sources 103a and 103b include a camera, a microphone, a clock, and various sensors, such as an illuminance sensor. External information sources 103a and 103b transmit information, such as video information captured by a camera, audio information collected by a microphone, sensor values obtained by various sensors, or time information, to remote monitoring system 101 via network 104. External information sources 103a and 103b transmit such information to remote monitoring system 101 without involving monitored target 102.

External information sources 103a and 103b are provided external to monitored target 102 and perform sensing of monitored target 102. External information sources 103a and 103b are devices that are, for example, not capable of communicating with monitored target 102. External information sources 103a and 103b, for example, may be stationary or may be movable. External information sources 103a and 103b are each an example of a sensing device that performs sensing of monitored target 102, and video information, audio information, a sensor value, and time information, for example, are each an example of sensing information obtained through sensing. A sensor value is, for example, a measured value of a dust sensor, but this is not a limiting example.

Herein, external information sources 103a and 103b may be devices that are installed in advance within a space in which monitored target 102 is used or may be devices dedicated to remote monitoring system 101. According to the present embodiment, it suffices that monitoring system 100 include at least two external information sources.

Network 104 is a communication network. Depending on the mode in which monitored target 102 and external information sources 103a and 103b operate, network 104 may be a closed network or may be the internet.

Anomaly detection system 200, with the use of information obtained from external information sources 103a and 103b, detects an anomaly in the state of monitored target 102 sent from this monitored target 102.

State estimator training system 300, with the use of the state sent from monitored target 102 and the information obtained from external information sources 103a and 103b, carries out training for improving the accuracy with which state estimator 303 estimates the state of monitored target 102.

Herein, state estimator training system 300 may be provided in remote monitoring system 101. In other words, remote monitoring system 101 may include a part or the whole of the functions of state estimator training system 300.

### [1-1. Configuration of Anomaly Detection System]

FIG. 2 is a block diagram showing a functional configuration of anomaly detection system 200 according to the present embodiment.

As shown in FIG. 2, anomaly detection system 200 includes state obtainer 201, information obtainers 202a and 202b, state estimators 203a and 203b, environment manager 204, state selector 205, alert issuer 206, and state comparer 207.

State obtainer 201 receives state information that is transmitted from monitored target 102 and that indicates a state of this monitored target 102. According to the present embodiment, state obtainer 201 obtains the current position of monitored target 102 as a state of this monitored target 102. State obtainer 201 includes, for example, a communication module (a communication circuit). State obtainer 201 is one example of a first obtainer.

Information obtainer 202a receives information that external information source 103a has transmitted, and information obtainer 202b receives information that external information source 103b has transmitted. Specifically, information obtainer 202a obtains, from external information source 103a, sensing information (e.g., first sensing information) indicating the sensing result of the sensing that external information source 103a has performed on monitored target 102, and information obtainer 202b obtains, from external information source 103b, sensing information (e.g., second sensing information) indicating the sensing result of the sensing that external information source 103b has performed on monitored target 102. The first sensing information and the second sensing information are sensing information of different types.

Information obtainers 202a and 202b each include, for example, a communication module (a communication circuit). Information obtainers 202a and 202b are each one example of a second obtainer.

State estimator 203a estimates the state of monitored target 102 (one example of a first state) based on the information that information obtainer 202a has obtained, and state estimator 203b estimates the state of monitored target 102 (one example of a second state) based on the information that information obtainer 202b has obtained. According to the present embodiment, state estimators 203a and 203b estimate, as the first state and the second state, the current position of monitored target 102. Sensing information used to estimate the first state and sensing information used to estimate the second state are information of different types, and thus the first state and the second state may indicate different states (e.g., different positions).

For example, the information that information obtainer 202a obtains is any one information selected from, for example, video information, audio information, a sensor value, and time information, and the information that information obtainer 202b obtains is information other than the one information selected from, for example, the video information, the audio information, the sensor value, and the time information. In other words, the information that information obtainer 202a obtains (the first sensing information) and the information that information obtainer 202b obtains (the second sensing information) are information of different types.

State estimator 203a estimates, for example, the first state with the use of a machine learning model, and state estimator 203b estimates, for example, the second state with the use of another machine learning model. A machine learning model is trained in advance to output a state of monitored target 102 in response to receiving an input of sensing information. The machine learning model that state estimator 203a uses and the machine learning model that state estimator 203b uses are machine learning models trained with the use of different items of input information.

Environment manager 204 manages, as environmental information (see FIG. 5, which will be described later), the accuracy of states that state estimators 203a and 203b estimate, for each environment in which state estimators 203a and 203b estimate states. Environmental information is information that links, for example, the environment in which the sensing of monitored target 102 has been performed and the accuracy with which state estimators 203a and 203b have each estimated the state of monitored target 102 in that environment. The environment as used herein is, for example, the time. Alternatively, the environment may be, for example but is not limited to, the weather or the brightness of the surroundings of monitored target 102. For example, environmental information may include the estimation accuracy of the first state and of the second state with respect to time.

State selector 205 selects, from the estimated states of monitored target 102 that state estimators 203a and 203b have estimated, an estimated state to be employed, with the use of the environmental information that environment manager 204 manages. State selector 205 selects one of the first state or the second state with the use of the environmental information and outputs the selected one of the first state or the second state as the estimated state (estimated state information).

Herein, state selector 205 is one example of a state determiner. The state determiner is not limited to estimating the state of monitored target 102 by selecting a state. The state determiner may calculate one state from the first state and the second state with the use of the environmental information and output the calculated one state as the estimated state. The state determiner may, for example, perform a weighting computation on the first state and the second state with the use of the environmental information and output one of the states subjected to the weighting computation as the estimated state.

State comparer 207 compares the state that state obtainer 201 has obtained (state information) and the estimated state obtained from state selector 205 (estimated state information). The estimated state information is information that is based at least on the first state, and according to the present embodiment, the estimated state information is information that is based on the first state and the second state. State comparer 207 compares, for example, the state of monitored target 102 that state obtainer 201 has obtained and the estimated state of monitored target 102 that state selector 205 has selected. If there is a difference of a predetermined magnitude or more between the aforementioned state and the aforementioned estimated state, state comparer 207 determines that there is an anomaly and notifies alert issuer 206 that an anomaly has been detected.

Based on the result of the comparison by state comparer 207, alert issuer 206 alerts (issues an alert to) a monitor of remote monitoring system 101 that an anomaly has occurred.

Herein, the estimation accuracy that environment manager 204 manages and with which state estimators 203a and 203b each estimate a state may be specified in advance by a monitor or the like or may be set with the use of the result of the training that state estimator training system 300 has performed. Environment manager 204 may determine the estimation accuracy of the estimated states that state estimators 203a and 203b have estimated, based, for example, on the information indicating the estimation accuracy obtained from state trainer 301 (see FIG. 3). The estimation accuracy may be determined, for example, with the use of a table indicating a correspondence relationship between the estimation accuracy and the information indicating the estimation accuracy.

Remote monitoring system 101 according to the present embodiment detects an alteration made by an attacker by estimating the state of a robot that serves as monitored target 102 with the use of information (sensing information) obtained from, for example, external information sources 103a and 103b. Furthermore, remote monitoring system 101 can maintain a high estimation accuracy in a variety of environments by selecting, from among a plurality of states, a state estimated with the use of the optimal information obtained from, for example, external information sources 103a and 103b, in accordance with the environment in which monitored target 102 operates.

### [1-2. Configuration of State Estimator Training System]

Next, a configuration of state estimator training system 300 will be described. FIG. 3 is a block diagram showing a functional configuration of state estimator training system 300 according to the present embodiment. FIG. 3 shows a configuration for performing a process of training one state estimator 303. It is to be noted that, although FIG. 3 shows external information source 103 for the sake of convenience, state estimator training system 300 obtains sensing information from each of external information sources 103a and 103b.

As shown in FIG. 3, state estimator training system 300 includes state obtainer 201a, information obtainer 202c, state trainer 301, environment manager 302, and state estimator 303.

State obtainer 201a has a configuration the same as the configuration of state obtainer 201 of anomaly detection system 200. State obtainer 201a obtains state information from monitored target 102. Meanwhile, information obtainer 202c has a configuration the same as the configuration of information obtainers 202a and 202b of anomaly detection system 200. Information obtainer 202c obtains sensing information from external information source 103.

State estimator 303 estimates the state of monitored target 102 based on the information of external information source 103 obtained from information obtainer 202c and outputs the estimated state and the time at which state estimator 303 has estimated the state of monitored target 102 to state trainer 301.

State trainer 301 calculates the estimation accuracy by comparing the state of monitored target 102 that state obtainer 201a has obtained and the estimated state that state estimator 303 has estimated and outputs the environment and the calculated estimation accuracy to environment manager 302 and state estimator 303. The estimated state in this example is information that is based, for example, on the difference (an estimation error) between the state of monitored target 102 obtained from state obtainer 201a and the estimated state of monitored target 102 obtained from state estimator 303.

Environment manager 302 manages the set of the environment (the time in this example) and the estimation accuracy obtained from state trainer 301 as environmental information.

Based on the estimation accuracy obtained from state trainer 301, state estimator 303 trains the machine learning model to improve the estimation accuracy.

In one example case of training in state estimator 303 described below, with the use of a regression model in which the information obtained from information obtainer 202c serves as an explanatory variable and the state of monitored target 102 serves as a dependent variable, and with an objective function served by the sum of squared error which is the sum of squared values of the difference between the state obtained from state obtainer 201a and the state of monitored target 102 that state estimator 303 has estimated, state estimator 303 trains the machine learning model so as to minimize the sum of squared error. Herein, the sum of squared error is one example of the estimation accuracy.

State estimator 303 estimates the state of monitored target 102 based on an intrinsic parameter, such as a weight or a bias of a regression model, and the information of external information source 103 obtained from information obtainer 202c and outputs the estimated state and the time at which state estimator 303 has estimated the state of monitored target 102 to state trainer 301.

Based on the state of monitored target 102 obtained from state obtainer 201a and the estimated state obtained from state estimator 303, state trainer 301 calculates the sum of squared error, which is the objective function, to calculate the estimation accuracy and outputs the environment (the time in this example) and the calculated estimation accuracy to environment manager 302 and state estimator 303.

Environment manager 302 manages the set of the environment and the estimation accuracy obtained from state trainer 301 as environmental information.

Based on the set of the intrinsic parameter used in a previous instance of estimation and the estimation accuracy obtained from state trainer 301 and the set of the intrinsic parameter used in the current instance of estimation and the estimation accuracy obtained from state trainer 301, state estimator 303 calculates, with the use of a differential equation, the slope of the change in the estimation accuracy observed as the intrinsic parameter has been changed and updates the intrinsic parameter so as to bring the slope to a negative value, that is, to reduce the sum of squared error.

Training in state trainer 301 is repeated with the intrinsic parameter of state estimator 303 updated, the intrinsic parameter is adjusted so that the state of monitored target 102 can be estimated with higher accuracy, and environment manager 302 manages the estimation accuracy for each environment. Then, state estimator training system 300 can relay the training result to anomaly detection system 200 by replacing the trained parameter of state estimator 303 and the trained environmental information that environment manager 204 manages with, respectively, the parameters (the intrinsic parameters) of state estimators 203a and 203b of anomaly detection system 200 and the environmental information of environment manager 204.

Herein, the adjustment (e.g., an update) to the intrinsic parameter of the machine learning model and the update of the environmental information are performed, for example, as one set. The environmental information includes the estimation accuracy observed with the adjusted intrinsic parameter. In this manner, the environmental information may be generated based on the process of training the machine learning model.

Herein, in a case in which remote monitoring system 101 includes a part of the functions of state estimator training system 300, state trainer 301 may calculate information (e.g., the sum of squared error) indicating the estimation accuracy of at least one of the first state or the second state of monitored target 102 that state estimator training system 300 has estimated, based on the state of monitored target 102 that state obtainer 201 has obtained and the at least one of the first state or the second state of monitored target 102 that state estimator training system 300 has estimated. Then, state trainer 301 may output the information indicating the calculated estimation accuracy to state estimators 203a and 203b and environment manager 204.

Herein, state trainer 301 may output the information indicating the calculated estimation accuracy to state estimators 203a and 203b and environment manager 204 before monitored target 102 is put into operation. Alternatively, state trainer 301 may output the information indicating the calculated estimation accuracy to state estimators 203a and 203b and environment manager 204 while monitored target 102 is in operation. While monitored target 102 is in operation, training is performed with the use of the state of monitored target 102 that state obtainer 201 has obtained when no anomaly has been detected by state comparer 207 and the estimated state that each of state estimators 203a and 203b has estimated.

### [1-3. Training Process in State Estimator Training System]

Next, a process of training for the accuracy of estimating the state of monitored target 102 in state estimator training system 300 will be described. FIG. 4 is a flowchart showing a training process (a remote monitoring method) in state estimator training system 300 according to the present embodiment.

As shown in FIG. 4, first, training (a training process) is performed in state estimator training system 300 (S401). At step S401, as the training, state estimator 303 estimates the state of monitored target 102 with the use of the state that information obtainer 202c has extracted and outputs the estimated state to state trainer 301. State trainer 301 compares the state that state estimator 303 has estimated and the state of monitored target 102 that state obtainer 201 has extracted, calculates the estimation accuracy, and outputs the calculated estimation accuracy to state estimator 303. State estimator 303 performs a process of adjusting the intrinsic parameter so as to improve the estimation accuracy based on the estimation accuracy that state trainer 301 has calculated. These processes are repeated a predetermined number of times at step S401.

State estimator training system 300 determines whether the estimation accuracy is sufficient (S402). State estimator training system 300 determines whether the estimation accuracy that environment manager 302 holds exceeds the accuracy set in advance.

If state estimator training system 300 has determined that the estimation accuracy is sufficient (YES at S402), state estimator training system 300 replaces the intrinsic parameter trained in state estimator 303 and the trained environmental information that environment manager 302 manages with, respectively, the intrinsic parameters of state estimators 203a and 203b of anomaly detection system 200 and the environmental information of environment manager 204, and the model is used then in anomaly detection system 200 (S403).

If state estimator training system 300 has determined that the estimation accuracy is not sufficient (NO at S402), state estimator training system 300 determines that the improvement in the estimation accuracy of state estimator 303 is not likely and revises the training method (S404), and then state estimator training system 300 executes step S401 again.

In one example of the training method, with state estimator 303 being a regression model in which the information obtained from information obtainer 202c serves as an explanatory variable and the state of monitored target 102 serves as a dependent variable, state trainer 301 trains the regression model with the use of the least-squares method so as to minimize the difference between the estimated state of monitored target 102 that state estimator 303 has estimated and the state obtained from state obtainer 201a.

If state estimator training system 300 has determined that the estimation accuracy observed after the training is not sufficient and the improvement in the estimation accuracy is not likely, state trainer 301, in the revised training method, revises a mathematical model by, for example, changing the regression model from the linear regression to the regression tree and improves the estimation accuracy until the error falls within a permissible range.

As described above, monitoring system 100 (or remote monitoring system 101) is provided with a training mode in which the machine learning model is trained. Furthermore, the training mode is executed, for example, within a space in which monitored target 102 is used.

### [1-4. Contents Managed in Environment Manager]

Next, the contents that environment manager 204 of anomaly detection system 200 manages will be described. FIG. 5 is a diagram showing one example of an environmental information table that environment manager 204 according to the present embodiment manages.

As shown in FIG. 5, an environmental information table includes environment 501 and estimation accuracy 502. Estimation accuracy 502 includes the estimation accuracy of state estimator 203a and the estimation accuracy of state estimator 203b.

Environment 501 indicates the environment in which state estimators 203a and 203b have each estimated the state. In FIG. 5, environment 501 is the time, and estimation accuracy 502 with respect to time is shown.

Estimation accuracy 502 indicates the estimation accuracy in environment 501. Estimation accuracy 502 indicates, in percentage, the ratio between the estimation accuracy of state estimator 203a and the estimation accuracy of state estimator 203b. In FIG. 5, the estimation accuracy is indicated by the ratio in order to show the difference in accuracy between state estimators 203a and 203b in a readily perceivable manner. Alternatively, the estimation accuracy may be shown with the use of any units that allow the difference in accuracy between state estimators 203a and 203b to be compared. Furthermore, the estimation accuracy is not limited to being indicated by numerical values and may be indicated by levels, such as "high", "mid", and "low".

For example, in the case of the example shown in FIG. 5, the estimation accuracy of the state of monitored target 102 that state estimator 203a has estimated at 12:00 based on the sensing information of external information source 103a is 80%, and the estimation accuracy of the state of monitored target 102 that state estimator 203b has estimated at 12:00 based on the sensing information of external information source 103b is 20%. Based on the above, it can be understood that, at 12:00, the estimation accuracy of the state of monitored target 102 that state estimator 203a has estimated is higher than the estimation accuracy of the state of monitored target 102 that state estimator 203b has estimated.

An environmental information table may be prepared in advance, may be created through training in state estimator training system 300, or may be created based on the environmental information of environment manager 302 of state estimator training system 300.

If an environmental information table is to be created through the training in state estimator training system 300, the environment held when an estimation is made is recorded in environment 501, and the estimation accuracy observed in that instance of estimation is recorded in estimation accuracy 502.

### [1-5. Process of Remote Monitoring System and Process of State Selector]

Next, a process performed by remote monitoring system 101 and a process performed by state selector 205 will be described. First, a process performed by remote monitoring system 101 will be described. FIG. 6A is a flowchart showing a process (a remote monitoring method) performed by remote monitoring system 101 according to the present embodiment.

As shown in FIG. 6A, first, state obtainer 201 obtains, from monitored target 102, state information indicating the state of this monitored target 102 (S601). The state information includes time information that indicates the time at which, for example, a sensor in monitored target 102 has performed sensing.

Next, information obtainers 202a and 202b obtain information for estimation from external information sources 103a and 103b (S602). Specifically, information obtainer 202a obtains, from external information source 103a, first sensing information as the information for estimation, and information obtainer 202b obtains, from external information source 103b, second sensing information as the information for estimation.

Herein, there is no particular limitation on the timing at which the first sensing information and the second sensing information are obtained, and the first sensing information and the second sensing information may be obtained, for example, at predetermined intervals. Furthermore, the first sensing information and the second sensing information may be obtained synchronously. For example, the first sensing information and the second sensing information are items of information obtained through sensing performed at the time within a predetermined time difference (e.g., within a few seconds to a few minutes) from the time indicated by the time information included in the state information.

Next, state estimators 203a and 203b each estimate the state of monitored target 102 based on each of the two or more items of information for estimation (S603). Specifically, state estimator 203a obtains, as the estimation result, the state of monitored target 102 (the first state) served by the output obtained when the first sensing information is input to the machine learning model. Meanwhile, state estimator 203b obtains, as the estimation result, the state of monitored target 102 (the second state) served by the output obtained when the second sensing information is input to the machine learning model. The first state and the second state as used herein are each information indicating the current position (e.g., the current position coordinates) of monitored target 102.

State estimators 203a and 203b output the estimation results to state selector 205.

Next, state selector 205 determines one state of monitored target 102 from among two or more estimated states of monitored target 102 (S604). According to the present embodiment, state selector 205 selects either one of the first state and the second state that has a higher estimation accuracy based on the environmental information and determines the selected state as the estimated state of monitored target 102. State selector 205 obtains, from the environmental information table, the estimation accuracy of each of state estimators 203a and 203b held at the time indicated by the time information included in the state information, and based on the obtained estimation accuracy, state selector 205 selects the one with a higher estimation accuracy from the first state and the second state.

State selector 205 outputs the selected estimated state of monitored target 102 to state comparer 207.

Next, state comparer 207 determines whether the difference between the state that state obtainer 201 has obtained from monitored target 102 and the estimated state is smaller than or equal to a threshold (S605). The threshold is set in advance.

Next, if state comparer 207 has determined that the difference is smaller than or equal to the threshold (YES at S605), this means that the state obtained from monitored target 102 is within a normal range, and thus state comparer 207 terminates the process. That the determination of YES is made at step S605 means that the state of monitored target 102 is not altered in monitored target 102. Meanwhile, if state comparer 207 determines that the difference is neither smaller than nor equal to the threshold (NO at S605), state comparer 207 outputs, to alert issuer 206, information indicating that an anomaly has been detected. That the determination of NO is made at step S605 means that the state of monitored target 102 has been altered in monitored target 102 or that it is highly likely that such an alteration has been made.

Next, alert issuer 206 issues, to the monitor of remote monitoring system 101, an alert indicating that an anomaly has been detected (S606). For example, such an alert may be issued through display on a display device, through an audible output from an audio output device, through light emission from a light emitting device, through another method, or through a combination of any of the above.

Next, a process performed by state selector 205 will be described. FIG. 6B is a flowchart showing a process (a remote monitoring method) performed by state selector 205 according to the present embodiment. FIG. 6B is a flowchart showing the details of step S604 of FIG. 6A.

As shown in FIG. 6B, state selector 205, for example, obtains the states that state estimators 203a and 203b have estimated at 12:00 (S611).

State selector 205 obtains, from environment manager 204, environmental information that links the environment and the estimation accuracy of state estimators 203a and 203b in that environment (S612).

State selector 205 makes the final selection of an estimated state based on the estimated states, the environment in which these states have been estimated, and the estimation accuracy in that environment (S613). In the environmental information shown in FIG. 5, the estimation accuracy of state estimator 203a at 12:00 is 80%, and the estimation accuracy of state estimator 203b at 12:00 is 20%. Therefore, state selector 205 selects the state with the higher, 80%, estimation accuracy that state estimator 203a has estimated. This selection is one example of determining one state of monitored target 102.

Herein, aside from selecting the state with the highest estimation accuracy, state selector 205 may weight each estimated state based on its estimation accuracy and calculate a newly estimated state in accordance with the weight. For example, a newly estimated state may be calculated such that a higher weight is given to a higher estimation accuracy.

### [Embodiment 2]

Next, an anomaly detection system employed in a case in which a monitored target is a robot that moves autonomously will be described. In the case described according to the present embodiment, whether the position information sent from a robot has been altered is determined.

FIG. 7 is a block diagram showing a functional configuration of anomaly detection system 700 according to the present embodiment.

As shown in FIG. 7, anomaly detection system 700 includes state obtainer 702, information obtainers 711 and 721, state estimators 712 and 722, environment manager 704, state selector 703, alert issuer 206, and state comparer 207.

A monitored target that anomaly detection system 700 monitors is robot 701, and external information sources are stationary camera 710 and stationary microphone 720.

Robot 701 transmits its position information to anomaly detection system 700. Examples of information that can be used as the position information include the measured position information of a global positioning system (GPS) device provided in robot 701 or the position information estimated by the simultaneous localization and mapping (SLAM) provided in robot 701.

Stationary camera 710 is installed at a position where stationary camera 710 can easily capture an image of robot 701, such as at a position near the ceiling of a room, and transmits captured video 713 to anomaly detection system 700. Stationary microphone 720 is installed at a position where stationary microphone 720 can easily collect sound associated with an activity of robot 701, such as at a position near the entrance within a room, and transmits collected audio 723 to anomaly detection system 700. Stationary camera 710 is one example of a first sensing device, and stationary microphone 720 is one example of a second sensing device.

State obtainer 702 receives position information from robot 701. State obtainer 702 obtains the position information of robot 701 as the state of robot 701.

Information obtainer 711 receives video 713 that stationary camera 710 has transmitted and extracts video data to be used to estimate a state. Examples of such video data include a bitmap image converted to grayscale. Video 713 is one example of first sensing information.

State estimator 712 estimates the position of robot 701 with the use of the video data that information obtainer 711 has extracted and outputs the estimated position as estimated state 714.

Information obtainer 721 receives audio 723 that stationary microphone 720 has transmitted and extracts audio data to be used to estimate a state. Examples of such audio data include pulse code modulation (PCM) data divided into predetermined cycles and subjected to a band pass filtering process so that only the frequency that allows for easy recognition of activity sound of robot 701 is included, but this is not a limiting example. Audio 723 is one example of second sensing information.

State estimator 722 estimates the position of robot 701 with the use of the audio data that information obtainer 721 has extracted and outputs the estimated position as estimated state 724.

Environment manager 704 manages environmental information 705 (see FIG. 8) that holds the estimation accuracy of stationary camera 710 with respect to time and the estimation accuracy of stationary microphone 720 with respect to time.

State selector 703 selects, from between estimated state 714 and estimated state 724, the estimated state with a higher estimation accuracy, in accordance with environmental information 705 managed by environment manager 704.

Alert issuer 206 has a configuration the same as the configuration of alert issuer 206 of anomaly detection system 200.

State comparer 207 compares the position information that state obtainer 702 has extracted and the estimated state (the estimated position information) that state selector 703 has selected. If there is a difference of a predetermined magnitude or more between the aforementioned position information and the aforementioned estimated state, state comparer 207 determines that there is an anomaly and informs alert issuer 206 of the detected anomaly.

To be more specific, state comparer 207 obtains, from state obtainer 702, the position information of robot 701 in the latitude and longitude format and obtains, from state selector 703, the estimated position information of robot 701 in the latitude and longitude format. State comparer 207 then calculates the distance between the two items of position information, and if the calculated distance exceeds a threshold set in advance, state comparer 207 determines that there is an anomaly.

In a case in which robot 701 works in a facility, such as an office building or a commercial establishment, the illuminance within the facility is expected to be high and the noise surrounding robot 701 is expected to be large during the time range in which robot 701 works, while the illuminance within the facility is expected to be low and the noise surrounding robot 701 is expected to be small outside the time range in which robot 701 works.

In such a case, a higher estimation accuracy is highly likely to be obtained if the state of robot 701 is estimated based on video 713 of stationary camera 710 during the time range in which robot 701 works and the state of robot 701 is estimated based on audio 723 of stationary microphone 720 outside the time range in which robot 701 works.

FIG. 8 is a diagram showing one example of an environmental information table that environment manager 704 of the anomaly detection system according to the present embodiment manages.

According to the environmental information table shown in FIG. 8, the estimation accuracy of state estimator 712 is set high during the time range from 12:00 to 22:00, which is the time range in which robot 701 works, and the estimation accuracy of state estimator 722 is set high during the time range from 22:00 to 12:00, which is outside the time range in which robot 701 works.

State selector 703 selects, as the position of robot 701, the position with a higher estimation accuracy under estimation accuracy 1002 at a predetermined time under environment 1001 in the environmental information table, and thus state selector 703 can select an optimal estimated state corresponding to any change in time.

The environmental information table shown in FIG. 8 may be created from the environmental information in environment manager 302 of state estimator training system 300 after state estimators 712 and 722 have been trained in state estimator training system 300.

In the description according to the present embodiment, there is only one stationary camera 710 and only one stationary microphone 720 in order to simplify the description. Alternatively, there may be a plurality of stationary cameras 710 and a plurality of stationary microphones 720.

### [Embodiment 3]

Next, an anomaly detection system employed in a case in which a monitored target is a security robot that performs a security task will be described. In the case described according to the present embodiment, whether the position information sent from a security robot has been altered is determined.

FIG. 9 is a block diagram showing a functional configuration of anomaly detection system 800 according to the present embodiment.

As shown in FIG. 9, anomaly detection system 800 includes state obtainer 802, information obtainers 811 and 821, state estimators 812 and 822, environment manager 804, state selector 803, alert issuer 206, and state comparer 207.

A monitored target that anomaly detection system 800 monitors is security robot 801, and external information sources are stationary camera 810 and illuminance sensor 820.

Security robot 801 transmits its position information to anomaly detection system 800. Examples of information that can be used as the position information include the measured position information of a GPS device provided in security robot 801 or the position information estimated by the SLAM provided in security robot 801.

Stationary camera 810 is installed at a position where stationary camera 810 can easily capture an image of security robot 801, such as at a position near the ceiling of a room, and transmits captured video 813 to anomaly detection system 800. Illuminance sensor 820 is installed on a moving path of security robot 801 and transmits obtained illuminance value 823 to anomaly detection system 800. Stationary camera 810 is one example of a first sensing device, and illuminance sensor 820 is one example of a second sensing device.

State obtainer 802 receives position information from security robot 801.

Information obtainer 811 receives video 813 that stationary camera 810 has transmitted and extracts video data to be used to estimate a state. Examples of such video data include a bitmap image converted to grayscale. Video 813 is one example of first sensing information.

State estimator 812 estimates the position of security robot 801 with the use of the video data that information obtainer 811 has extracted and outputs the estimated position as estimated state 814.

Information obtainer 821 receives illuminance value 823 that illuminance sensor 820 has transmitted and extracts illuminance data to be used to estimate a state. The illuminance data is a value obtained by converting the illuminance value to lux, which is the unit for brightness. Illuminance value 823 is one example of second sensing information.

State estimator 822 estimates the position of security robot 801 with the use of the illuminance data that information obtainer 821 has extracted and outputs the estimated position as estimated state 824.

Specifically, when security robot 801 conducts a patrol while lights in the surrounding area are not on during the nighttime, for example, security robot 801 itself illuminates the surrounding area. Therefore, information obtainer 821 obtains the illuminance value of illuminance sensor 820, and based on the obtained illuminance value, state estimator 822 estimates how far away security robot 801 is located.

Environment manager 804 manages environmental information 805 (see FIG. 10) that holds the estimation accuracy of stationary camera 810 with respect to time and the estimation accuracy of illuminance sensor 820 with respect to time.

State selector 803 selects, from between estimated state 814 and estimated state 824, the estimated state with a higher estimation accuracy, in accordance with environmental information 805 managed by environment manager 804.

Alert issuer 206 has a configuration the same as the configuration of alert issuer 206 of anomaly detection system 200.

State comparer 207 compares the position information that state obtainer 802 has extracted and the estimated state (the estimated position information) that state selector 803 has selected. If there is a difference of a predetermined magnitude or more between the aforementioned position information and the aforementioned estimated state, state comparer 207 determines that there is an anomaly and informs alert issuer 206 of the detected anomaly.

In security robot 801, in one contemplated case, when security robot 801 is on patrol as a part of a security task, security robot 801 makes a recording with an embedded camera of security robot 801 during the patrol, and that recording serves as evidence of that patrol. Therefore, the light of security robot 801 is turned on while security robot 801 conducts a patrol during the nighttime in order to ensure or secure the illumination necessary for making a recording, and thus the illuminance value of the area surrounding security robot 801 becomes high.

FIG. 10 is a diagram showing one example of an environmental information table that environment manager 804 of anomaly detection system 800 according to the present embodiment manages.

According to the environmental information table shown in FIG. 10, the estimation accuracy of state estimator 812 is set high during the time range from 08:00 to 20:00, which is the time range in which the surroundings is bright as in the daytime and an image of security robot 801 is captured clearly in the video of stationary camera 810, and the estimation accuracy of state estimator 822 is set high during the time range from 22:00 to 08:00, which is the time range in which an image of security robot 801 is not captured clearly in the video of stationary camera 810 since its surroundings are dark as in the nighttime but any change in the illuminance value associated with the light turned on by the security robot can be detected more easily.

State selector 803 selects, as the position of security robot 801, the position with a higher estimation accuracy under estimation accuracy 1102 at a predetermined time under environment 1101 in the environmental information table, and thus state selector 803 can select an optimal estimated state corresponding to any change in time.

The environmental information table may be created from the environmental information in environment manager 302 of state estimator training system 300 after state estimators 812 and 822 have been trained in state estimator training system 300.

In the description according to the present embodiment, there is only one stationary camera 810 and only one illuminance sensor 820 in order to simplify the description. Alternatively, there may be a plurality of stationary cameras 810 and a plurality of illuminance sensors 820.

### [Embodiment 4]

Next, an anomaly detection system employed in a case in which a monitored target is a cleaning robot that performs a cleaning task will be described. In the case described according to the present embodiment, whether the position information sent from a cleaning robot has been altered is determined.

FIG. 11 is a block diagram showing a functional configuration of anomaly detection system 900 according to the present embodiment.

As shown in FIG. 11, anomaly detection system 900 includes state obtainer 902, information obtainers 911 and 921, state estimators 912 and 922, environment manager 904, state selector 903, alert issuer 206, and state comparer 207.

A monitored target that anomaly detection system 900 monitors is cleaning robot 901, and external information sources are stationary camera 910 and dust sensor 920.

Cleaning robot 901 transmits its position information to anomaly detection system 900. Examples of information that can be used as the position information include the measured position information of a GPS device provided in cleaning robot 901 or the position information estimated by the SLAM provided in cleaning robot 901.

Stationary camera 910 is installed at a position where stationary camera 910 can easily capture an image of cleaning robot 901, such as at a position near the ceiling of a room, and transmits captured video 913 to anomaly detection system 900. Dust sensor 920 is installed at a position around an area where cleaning robot 901 performs a cleaning task and transmits obtained sensor value 923 to anomaly detection system 900. Stationary camera 910 is one example of a first sensing device, and dust sensor 920 is one example of a second sensing device.

State obtainer 902 receives position information from cleaning robot 901.

Information obtainer 911 receives video 913 that stationary camera 910 has transmitted and extracts video data to be used to estimate a state. Examples of such video data include a bitmap image converted to grayscale. Video 913 is one example of first sensing information.

State estimator 912 estimates the position of cleaning robot 901 with the use of the video data that information obtainer 911 has extracted and outputs the estimated position as estimated state 914.

Information obtainer 921 receives sensor value 923 that dust sensor 920 has transmitted and extracts a sensor value to be used to estimate a state. Examples of such a sensor value include the amount of particles present in the atmosphere. Sensor value 923 is one example of second sensing information.

State estimator 922 estimates the position of cleaning robot 901 with the use of the sensor data that information obtainer 921 has extracted and outputs the estimated position as estimated state 924.

Specifically, cleaning robot 901 performs a cleaning task while people who engage in activities in its surroundings are not present, such as during the nighttime. The cleaning task that cleaning robot 901 performs causes dust to rise in its surroundings. Thus, information obtainer 921 obtains the sensor value from dust sensor 920, and based on the obtained sensor value, state estimator 922 estimates how far away cleaning robot 901 is located.

Environment manager 904 manages environmental information 905 (see FIG. 12) that holds the estimation accuracy of stationary camera 910 with respect to time and the estimation accuracy of dust sensor 920 with respect to time.

State selector 903 selects, from between estimated state 914 and estimated state 924, the estimated state with a higher estimation accuracy, in accordance with environmental information 905 managed by environment manager 904.

Alert issuer 206 has a configuration the same as the configuration of alert issuer 206 of anomaly detection system 200.

State comparer 207 compares the position information that state obtainer 902 has extracted and the estimated state (the estimated position information) that state selector 903 has selected. If there is a difference of a predetermined magnitude or more between the aforementioned position information and the aforementioned estimated state, state comparer 207 determines that there is an anomaly and informs alert issuer 206 of the detected anomaly.

When cleaning robot 901 performs a cleaning task, dust may rise in the atmosphere. Therefore, the sensor value of the dust sensor changes a great deal in the surroundings of cleaning robot 901 during the cleaning task.

FIG. 12 is a diagram showing one example of an environmental information table that environment manager 904 of anomaly detection system 900 according to the present embodiment manages.

According to the environmental information table shown in FIG. 12, the estimation accuracy of state estimator 912 is set high during the time range from 07:00 to 21:00, which is the time range in which the surroundings of cleaning robot 901 is bright as in the daytime and an image of cleaning robot 901 is captured clearly in the video of stationary camera 910, and the estimation accuracy of state estimator 922 is set high during the time range from 21:00 to 07:00, which is the time range in which an image of cleaning robot 901 is not captured clearly in the vide of stationary camera 910 since the surroundings of cleaning robot 901 is dark as in the nighttime.

State selector 903 selects, as the position of cleaning robot 901, the position with a higher estimation accuracy under estimation accuracy 1202 at a predetermined time under environment 1201 in the environmental information table, and thus state selector 903 can select an optimal estimated state corresponding to any change in time.

The environmental information table may be created from the environmental information in environment manager 302 of state estimator training system 300 after state estimators 912 and 922 have been trained in state estimator training system 300.

In the description according to the present embodiment, there is only one stationary camera 910 and only one dust sensor 920 in order to simplify the description. Alternatively, there may be a plurality of stationary cameras 910 and a plurality of dust sensors 920.

### [Other Embodiments]

Thus far, the remote monitoring system and so forth according to one or more aspects have been described based on the embodiments, but these embodiments do not limit the present disclosure.

For example, a monitored target according to each of the foregoing embodiments may be a mobile body used indoors or a mobile body used outdoors.

Furthermore, the monitoring system according to each of the foregoing embodiments may include only one external information source. In this case, an anomaly detection system does not need to include a state selector. Furthermore, an environment manager may output environmental information to a state comparer, and a state comparer may compare state information and estimated state information based on environmental information. A state comparer may, for example, change the threshold against which the difference between state information and estimated state information is compared, in accordance with environmental information. For example, a state comparer may change the threshold to a higher value as the estimation accuracy indicated by environmental information is higher.

Furthermore, in the examples illustrated in the foregoing embodiments, the sum of squared error is illustrated as the loss function. The loss function, however, is not limited to the sum of squared error, and any loss functions may be used.

Furthermore, in the examples described according to Embodiments 2 to 4 above, a stationary camera is used as a first sensing device, but this is not a limiting example. Each of a first sensing device and a second sensing device may be any device that can obtain different sensing information, and a sensing device other than a stationary camera, for example, may also be used.

In each of the foregoing embodiments, the constituent elements may each be implemented by a dedicated piece of hardware or may each be implemented through the execution of a software program suitable for a corresponding constituent element. The constituent elements may each be implemented as a program executing unit, such as a CPU or a processor, reads out a software program recorded on a recording medium, such as a hard disk or a semiconductor memory, and executes the software program.

The order of executing the steps in each flowchart is for illustrating an example serving to describe the present disclosure in concrete terms, and the order may differ from the ones described above. Furthermore, one or more of the steps described above may be executed simultaneously (in parallel) with another step, or one or more of the steps described above do not have to be executed.

The divisions of the functional blocks in the block diagrams are merely examples. A plurality of functional blocks may be implemented as a single functional block, a single functional block may be divided into a plurality of functional blocks, or one or more of the functions may be transferred to another functional block. Furthermore, the functions of a plurality of functional blocks having similar functions may be processed in parallel or through time division by a single piece of hardware or software.

Furthermore, the remote monitoring system according to each of the foregoing embodiments may be implemented in the form of a single device or in the form of a plurality of devices. In a case in which a remote monitoring system is implemented by a plurality of devices, the constituent elements of the remote monitoring system may be distributed over the plurality of devices in any manner. In a case in which a remote monitoring system is implemented by a plurality of devices, there is no particular limitation on the method of communication between the plurality of devices, and such communication may be wireless communication or wired communication. The devices may also communicate with each other through a combination of wireless communication and wired communication.

Furthermore, each constituent element described according to the foregoing embodiments and so forth may be implement by software or may typically be implemented in the form of an LSI circuit, which is an integrated circuit. The constituent elements may each be implemented by a single chip, or a part or the whole of the constituent elements may be implemented by a single chip. Although an LSI circuit is illustrated as an example in the above, depending on the difference in the degree of integration, such a circuit may also be called an IC, a system LSI circuit, a super LSI circuit, or an ultra LSI circuit. The techniques for circuit integration are not limited to LSI, and an integrated circuit may be implemented by a dedicated circuit (e.g., a general purpose circuit that executes a dedicated program) or by a general purpose processor. A field programmable gate array (FPGA) that can be programmed after an LSI circuit has been manufactured or a reconfigurable processor in which the connections or the settings of the circuit cells within an LSI circuit can be reconfigured may also be used. Furthermore, when a technique for circuit integration that replaces LSI appears through the advancement in the semiconductor technology or through a derived different technique, the constituent elements may be integrated with the use of such different techniques.

A system LSI circuit is an ultra-multifunctional LSI circuit manufactured by integrating a plurality of processors on a single chip, and is, specifically, a computer system that includes, for example, a microprocessor, a read only memory (ROM), or a random access memory (RAM). The ROM stores a computer program. The microprocessor operates in accordance with the computer program, and thus the system LSI circuit implements its functions.

Furthermore, one aspect of the present disclosure may be a computer program that causes a computer to execute each of the characteristic steps included in the remote monitoring method indicated in any of FIG. 4, FIG. 6A, and FIG. 6B.

Furthermore, for example, such a program may be a program to be executed by a computer. One aspect of the present disclosure may be a non-transitory computer readable recording medium having such a program recorded thereon. For example, such a program may be recorded on a recording medium, which then may be distributed. For example, a distributed program can be installed onto a device including another processor, and the program can be executed by this processor. Thus, the device can perform each of the processes described above.

### [Industrial Applicability]

The present disclosure finds its effective use in an anomaly detection system that, when remotely monitoring a robot that operates autonomously, determines whether the state that the robot being monitored sends to a remote monitoring system differs from the actual state.

### [Reference Signs List]

100 monitoring system
101 remote monitoring system
102 monitored target
103, 103a, 103b external information source (sensing device)
104 network
200, 700, 800, 900 anomaly detection system
201, 201a, 702, 802, 902 state obtainer (first obtainer)
202, 202a, 202b, 202c, 711, 721, 811, 821, 911, 921 information obtainer (second obtainer)
203a, 203b, 303, 712, 722, 812, 822, 912, 922 state estimator
204, 302, 704, 804, 904 environment manager
205, 703, 803, 903 state selector (state determiner)
206 alert issuer
207 state comparer
300 state estimator training system
301 state trainer
501, 1001, 1101, 1201 environment
502, 1002, 1102, 1202 estimation accuracy
701 robot (monitored target)
705, 805, 905 environmental information
710, 810, 910 stationary camera (first sensing device)
713, 813, 913 video (first sensing information)
714, 724, 814, 824, 914, 924 estimated state
720 stationary microphone (second sensing device)
723 audio (second sensing information)
801 security robot (monitored target)
820 illuminance sensor (second sensing device)
823 illuminance value (second sensing information)
901 cleaning robot (monitored target)
920 dust sensor (second sensing device)
923 sensor value (second sensing information)

## Claims

1. A remote monitoring system (101; 700) that detects an anomaly in a state of a monitored target (102; 701) configured to operate autonomously, the remote monitoring system comprising:
a first obtainer (201; 201a; 702) configured to obtain state information from the monitored target, the state information indicating a state of the monitored target;
a second obtainer (202a, 202b; 710, 720) configured to:
- obtain first sensing information from a first sensing device (103a; 103; 710; 810; 910), the first sensing information indicating a result of the sensing of the monitored target; and
- obtain second sensing information from a second sensing device (103b; 720; 820; 920) different from the first sensing device, the second sensing information being different from the first sensing information,
wherein the first sensing device and the second sensing device being provided outside the monitored target and performing sensing of the monitored target, respectively;
a state estimator (203a, 203b; 303; 712) configured to:
- estimate a first state based on the first sensing information, the first state being the state of the monitored target; and
- estimate a second state based on the second sensing information, the second state being the state of the monitored target;
a state trainer (301) configured to calculate information indicating an estimation accuracy of at least one of the first state or the second state based on the state of the monitored target and the at least one of the first state or the second state of the monitored target;
an environment manager (204) configured to manage environmental information linking an environment (501) in which sensing of the monitored target is performed and an estimation accuracy (502) of a current position of the monitored target that the state estimator estimates as the first state and as the second state, respectively;
a state determiner (205; 703; 803; 903) configured to:
- determine one state from between the first state and the second state with use of the environmental information, and
- output the one state determined as the estimated state information;
a state comparer (207) configured to compare the state information with estimated state information that is based on the first state and the second state; and
a notifier (206) configured to notify a monitor of the remote monitoring system of an occurrence of an anomaly, based on a comparison result of the state comparer.

2. The remote monitoring system according to claim 1, wherein
the state determiner is configured to select one of the first state or the second state with use of the environmental information, and is configured to output the one selected as the estimated state information.

3. The remote monitoring system according to claim 1, wherein
the state determiner is configured to perform a weighting operation on the first state and the second state with use of the environmental information, and is configured to output a weighted state as the estimated state information.

4. The remote monitoring system according to any one of claims 1 to 3, wherein
the first obtainer is configured to obtain the current position,
the state estimator is configured to estimate the current position of the monitored target as the first state and the second state, and
the environmental information includes an estimation accuracy of the first state and the second state with respect to time.

5. The remote monitoring system according to claim 4, wherein
the monitored target is a robot (701),
the first sensing device includes a stationary camera (710), and
the second sensing device includes a stationary microphone (720).

6. The remote monitoring system according to claim 4, wherein
the monitored target is a robot (801) configured to perform a security task,
the first sensing device includes a stationary camera (810), and
the second sensing device includes an illuminance sensor (820).

7. The remote monitoring system according to claim 4, wherein
the monitored target is a robot (901) configured to perform a cleaning task,
the first sensing device includes a stationary camera (910), and
the second sensing device includes a dust sensor (920).

8. The remote monitoring system according to any one of claims 1 to 7, wherein
the state trainer is configured to output the calculated information to the state estimator and the environment manager.

9. The remote monitoring system according to claim 8, wherein
the environment manager (302) is configured to determine an estimation accuracy of the state that the state estimator estimates, based on the information that is obtained from the state trainer and indicates the estimation accuracy.

10. The remote monitoring system according to claim 8 or 9, wherein
the state trainer is configured to output the information calculated indicating the estimation accuracy to the state estimator and the environment manager before the monitored target is put into operation.

11. The remote monitoring system according to any one of claims 8 to 10, wherein
the state trainer is configured to output the information calculated indicating the estimation accuracy to the state estimator and the environment manager while the monitored target is in operation.

12. The remote monitoring system according to claim 1, wherein
the state comparer is configured to compare the state information with the estimated state information based on the environmental information.

13. A remote monitoring method of detecting an anomaly in a state of a monitored target (102) configured to operate autonomously, the remote monitoring method comprising:
obtaining (S601) state information from the monitored target, the state information indicating a state of the monitored target;
obtaining (S602) first sensing information from a first sensing device (103a; 103; 710; 810; 910), the first sensing information indicating a result of the sensing of the monitored target;
obtaining (S602) second sensing information from a second sensing device (103b; 720; 820; 920) different from the first sensing device, the second sensing information being different from the first sensing information,
wherein the first sensing device and the second sensing device being provided outside the monitored target and performing sensing of the monitored target, respectively,
estimating (S603) a first state based on the first sensing information, the first state being the state of the monitored target;
estimating (S603) a second state based on the second sensing information, the second state being the state of the monitored target;
calculating information indicating an estimation accuracy of at least one of the first state or the second state based on the state of the monitored target and the at least one of the first state or the second state of the monitored target;
managing environmental information linking an environment (501) in which sensing of the monitored target is performed and an estimation accuracy (502) of a current position of the monitored target that the state estimator estimates as the first state and as the second state, respectively;
determining one state from between the first state and the second state with use of the environmental information, and outputting the one state determined as the estimated state information;
comparing (S605) the state information with estimated state information that is based on the first state and the second state; and
notifying (S606) a monitor of a remote monitoring system of an occurrence of an anomaly, based on a comparison result of the state information and the estimated state information.

14. A program, which when executed by a computer, causes the computer to execute the remote monitoring method according to claim 13.

## Patentansprüche

1. Fernüberwachungssystem (101; 700), das eine Abweichung in einem Status eines überwachten Objekts (102; 701) erfasst, das so ausgeführt ist, dass es autonom arbeitet, wobei das Fernüberwachungssystem umfasst:
eine erste Ermittlungseinrichtung (201; 201a; 702), die so ausgeführt ist, dass sie Status-Informationen von dem überwachten Objekt ermittelt, wobei die Status-Informationen einen Status des überwachten Objekts anzeigen;
eine zweite Ermittlungseinrichtung (202a, 202b; 710, 720) die ausgeführt ist zum:
- Ermitteln erster Erkennungs-Informationen von einer ersten Erkennungseinrichtung (103a; 103; 710; 810; 910), wobei die ersten Erkennungs-Informationen ein Ergebnis des Erkennens des überwachten Objekts anzeigen; und
- Ermitteln zweiter Erkennungs-Informationen von einer zweiten Erkennungseinrichtung (103b; 720; 820; 920), die sich von der ersten Erkennungseinrichtung unterscheidet, wobei sich die zweiten Erkennungs-Informationen von den ersten Erkennungs-Informationen unterscheiden,
wobei sich die erste Erkennungseinrichtung und die zweite Erkennungseinrichtung außerhalb des überwachten Objekts befinden und jeweils Erkennen des überwachten Objekts durchführen;
eine Status-Schätzeinrichtung (203a, 203b; 303, 712), die ausgeführt ist zum:
- Schätzen eines ersten Status auf Basis der ersten Erkennungs-Informationen, wobei der erste Status der Status des überwachten Objekts ist; und
- Schätzen eines zweiten Status auf Basis der zweiten Erkennungs-Informationen, wobei der zweite Status der Status des überwachten Objekts ist;
eine Status-Trainingseinrichtung (301), die so ausgeführt ist, dass sie Informationen, die eine Schätzungsgenauigkeit des ersten Status oder/und des zweiten Status anzeigen,
auf Basis des Status des überwachten Objekts sowie des ersten Status oder/und des zweiten Status des überwachten Objekts berechnet;
eine Umgebungs-Verwaltungseinrichtung (204), die so ausgeführt ist, dass sie Umgebungs-Informationen verwaltet, die eine Umgebung (501), in der Erkennen des überwachten Objekts durchgeführt wird, und eine Schätzungsgenauigkeit (502) einer aktuellen Position des überwachten Objekts verknüpft, die die Status-Schätzeinrichtung als den ersten Status bzw. den zweiten Status schätzt;
eine Status-Bestimmungseinrichtung (205; 703; 803; 903), die ausgeführt ist zum:
- Bestimmen eines Status von dem ersten Status und dem zweiten Status unter Verwendung der Umgebungs-Informationen, sowie
- Ausgeben des einen bestimmten Status als die geschätzten Status-Informationen;
eine Status-Vergleichseinrichtung (207), die so ausgeführt ist, dass sie die Status-Informationen mit geschätzten Status-Informationen vergleicht, die auf dem ersten Status und dem zweiten Status basieren; sowie
eine Benachrichtigungseinrichtung (206), die eine Überwachungseinrichtung des Fernüberwachungssystems über ein Auftreten einer Abweichung auf Basis eines Vergleichsergebnisses der Status-Vergleichseinrichtung benachrichtigt.

2. Fernüberwachungssystem nach Anspruch 1, wobei
die Status-Bestimmungseinrichtung so ausgeführt ist, dass sie den ersten Status oder den zweiten Status unter Verwendung der Umgebungs-Informationen auswählt, und so ausgeführt ist, dass sie den einen ausgewählten Status als die geschätzten Status-Informationen ausgibt.

3. Fernüberwachungssystem nach Anspruch 1, wobei
die Status-Bestimmungseinrichtung so ausgeführt ist, dass sie einen Gewichtungsvorgang an dem ersten Status und dem zweiten Status unter Verwendung der Umgebungs-Informationen auswählt, und so ausgeführt ist, dass sie einen gewichteten Status als die geschätzten Status-Informationen ausgibt.

4. Fernüberwachungssystem nach einem der Ansprüche 1 bis 3, wobei die erste Ermittlungseinrichtung so ausgeführt ist, dass sie die aktuelle Position ermittelt, die Status-Schätzeinrichtung so ausgeführt ist, dass sie die aktuelle Position des überwachten Objekts als den ersten und den zweiten Status ermittelt, und
die Umgebungs-Informationen eine Schätzungsgenauigkeit des ersten Status und des zweiten Status in Bezug auf die Zeit einschließen.

5. Fernüberwachungssystem nach Anspruch 4, wobei
das überwachte Objekt ein Roboter (701) ist,
die erste Erkennungseinrichtung eine stationäre Kamera (710) einschließt und die zweite Erkennungseinrichtung ein stationäres Mikrofon (720) einschließt.

6. Fernüberwachungssystem nach Anspruch 4, wobei
das überwachte Objekt ein Roboter (801) ist, der zum Durchführen einer Sicherheitsaufgabe ausgeführt ist,
die erste Erkennungseinrichtung eine stationäre Kamera (810) einschließt und die zweite Erkennungseinrichtung einen Beleuchtungsstärke-Sensor (820) einschließt.

7. Fernüberwachungssystem nach Anspruch 4, wobei
das überwachte Objekt ein Roboter (901) ist, der zum Durchführen einer Reinigungsaufgabe ausgeführt ist,
die erste Erkennungseinrichtung eine stationäre Kamera (910) einschließt, und die zweite Erkennungseinrichtung einen Staub-Sensor (920) einschließt.

8. Fernüberwachungssystem nach einem der Ansprüche 1 bis 7, wobei
die Status-Trainingseinrichtung so ausgeführt ist, dass sie die berechneten Informationen an die Status-Schätzeinrichtung und die Umgebungs-Verwaltungseinrichtung ausgibt.

9. Fernüberwachungssystem nach Anspruch 8, wobei
die Umgebungs-Verwaltungseinrichtung (302) so ausgeführt ist, dass sie eine Schätzungsgenauigkeit des Status, den die Status-Schätzeinrichtung schätzt, auf Basis der Informationen bestimmt, die von der Status-Trainingseinrichtung ermittelt werden und die Schätzungsgenauigkeit anzeigen.

10. Fernüberwachungssystem nach Anspruch 8 oder 9, wobei
die Status-Trainingseinrichtung so ausgeführt ist, dass sie die berechneten Informationen, die die Schätzungsgenauigkeit anzeigen, an die Status-Schätzeinrichtung und die Umgebungs-Verwaltungseinrichtung ausgibt, bevor das überwachte Objekt in Betrieb genommen wird.

11. Fernüberwachungssystem nach einem der Ansprüche 8 bis 10, wobei
die Status-Trainingseinrichtung so ausgeführt ist, dass sie die berechneten Informationen, die die Schätzungsgenauigkeit anzeigen, an die Status-Schätzeinrichtung und die Umgebungs-Verwaltungseinrichtung ausgibt, wenn das überwachte Objekt in Betrieb ist.

12. Fernüberwachungssystem nach Anspruch 1, wobei
die Status-Vergleichseinrichtung so ausgeführt ist, dass sie die Status-Informationen mit den auf Basis der Umgebungs-Informationen geschätzten Status-Informationen vergleicht.

13. Fernüberwachungsverfahren zum Erfassen einer Abweichung in einem Status eines überwachten Objekts (102), das so ausgeführt ist, dass es autonom arbeitet, wobei das Fernüberwachungsverfahren umfasst:
Ermitteln (S601) von Status-Informationen von dem überwachten Objekt, wobei die Status-Informationen einen Status des überwachten Objekts anzeigen;
Ermitteln (S602) erster Erkennungs-Informationen von einer ersten Erkennungseinrichtung (103a; 103; 710; 810; 910), wobei die ersten Erkennungs-Informationen ein Ergebnis des Erkennens des überwachten Objekts anzeigen;
Ermitteln (S602) zweiter Erkennungs-Informationen von einer zweiten Erkennungseinrichtung (103b; 720; 820; 920), die sich von der ersten Erkennungseinrichtung unterscheidet,
wobei sich die zweiten Erkennungs-Informationen von den ersten Erkennungs-Informationen unterscheiden, wobei sich die erste Erkennungseinrichtung und die zweite Erkennungseinrichtung außerhalb des überwachten Objekts befinden und jeweils Erkennen des überwachten Objekts durchführen;
Schätzen (S603) eines ersten Status auf Basis der ersten Erkennungs-Informationen,
wobei der erste Status der Status des überwachten Objekts ist;
Schätzen (S603) eines zweiten Status auf Basis der zweiten Erkennungs-Informationen,
wobei der zweite Status der Status des überwachten Objekts ist;
Berechnen von Informationen, die eine Schätzungsgenauigkeit des ersten Status oder/und des zweiten Status anzeigen, auf Basis des Status des überwachten Objekts sowie des ersten oder/und des zweiten Status des überwachten Objekts;
Verwalten von Umgebungs-Informationen, die eine Umgebung (501), in der Erkennen des überwachten Objekts durchgeführt wird, und eine Schätzungsgenauigkeit (502) einer aktuellen Position des überwachten Objekts verknüpft, die die Status-Schätzeinrichtung als den ersten Status bzw. den zweiten Status schätzt;
Bestimmen eines Status von dem ersten Status und dem zweiten Status unter Verwendung der Umgebungs-Informationen, sowie
Ausgeben des einen bestimmten Status als die geschätzten Status-Informationen;
Vergleichen (S605) der Status-Informationen mit geschätzten Status-Informationen, die auf dem ersten Status und dem zweiten Status basieren; sowie Benachrichtigen (S606) einer Überwachungseinrichtung eines Fernüberwachungssystems über ein Auftreten einer Abweichung auf Basis eines Vergleichsergebnisses der Status-Informationen und der geschätzten Status-Informationen.

14. Programm, das, wenn es von einem Computer ausgeführt wird, den Computer veranlasst, das Fernüberwachungsverfahren nach Anspruch 13 auszuführen.

## Revendications

1. Système de surveillance à distance (101 ; 700) qui détecte une anomalie dans un état d'une cible surveillée (102 ; 701) configurée pour fonctionner de manière autonome, le système de surveillance à distance comprenant :
un premier acquéreur (201 ; 201a ; 702) configuré pour acquérir des informations d'état auprès de la cible surveillée, les informations d'état indiquant un état de la cible surveillée ;
un second acquéreur (202a, 202b ; 710, 720) configuré pour :
- acquérir des premières informations de détection auprès d'un premier dispositif de détection (103a ; 103 ; 710 ; 810 ; 910), les premières informations de détection indiquant un résultat de la détection de la cible surveillée ; et
- acquérir des secondes informations de détection auprès d'un second dispositif de détection (103b ; 720 ; 820 ; 920) différent du premier dispositif de détection, les secondes informations de détection étant différentes des premières informations de détection,
dans lequel le premier dispositif de détection et le second dispositif de détection sont agencés à l'extérieur de la cible surveillée et effectuent respectivement une détection de la cible surveillée ;
un estimateur d'états (203a, 203b ; 303 ; 712) configuré pour :
- estimer un premier état sur la base des premières informations de détection, le premier état étant l'état de la cible surveillée ; et
- estimer un second état sur la base des secondes informations de détection, le second état étant l'état de la cible surveillée ;
un entraîneur d'état (301) configuré pour calculer des informations indiquant une précision d'estimation d'au moins l'un des premier état ou second état sur la base de l'état de la cible surveillée et du au moins l'un des premier état ou second état de la cible surveillée ;
un gestionnaire d'environnement (204) configuré pour gérer des informations environnementales reliant un environnement (501) dans lequel la détection de la cible surveillée est effectuée et une précision d'estimation (502) d'une position actuelle de la cible surveillée que l'estimateur d'états estime respectivement comme le premier état et comme le second état ;
un déterminateur d'état (205 ; 703 ; 803 ; 903) configuré pour :
- déterminer un état entre le premier état et le second état en utilisant les informations environnementales, et
- délivrer en sortie l'état déterminé comme les informations d'état estimées ;
un comparateur d'états (207) configuré pour comparer les informations d'état avec les informations d'état estimées qui sont basées sur les premier état et second état ; et
un notificateur (206) configuré pour notifier, à un dispositif de surveillance du système de surveillance à distance, une occurrence d'une anomalie, sur la base d'un résultat de comparaison du comparateur d'états.

2. Système de surveillance à distance selon la revendication 1, dans lequel le déterminateur d'état est configuré pour sélectionner l'un des premier état ou second état en utilisant les informations environnementales et est configuré pour délivrer en sortie celui sélectionné comme les informations d'état estimées.

3. Système de surveillance à distance selon la revendication 1, dans lequel le déterminateur d'état est configuré pour effectuer une opération de pondération sur le premier état et le second état en utilisant les informations environnementales, et est configuré pour délivrer en sortie un état pondéré comme les informations d'état estimées.

4. Système de surveillance à distance selon l'une quelconque des revendications 1 à 3, dans lequel
le premier acquéreur est configuré pour acquérir la position actuelle,
l'estimateur d'états est configuré pour estimer la position actuelle de la cible surveillée comme le premier état et le second état, et
les informations environnementales comportent une précision d'estimation du premier état et du second état en fonction du temps.

5. Système de surveillance à distance selon la revendication 4, dans lequel la cible surveillée est un robot (701),
le premier dispositif de détection comporte une caméra fixe (710), et
le second dispositif de détection comporte un microphone fixe (720).

6. Système de surveillance à distance selon la revendication 4, dans lequel la cible surveillée est un robot (801) configuré pour effectuer une tâche de sécurité, le premier dispositif de détection comporte une caméra fixe (810), et
le second dispositif de détection comporte un capteur de luminance (820).

7. Système de surveillance à distance selon la revendication 4, dans lequel la cible surveillée est un robot (901) configuré pour effectuer une tâche de nettoyage, le premier dispositif de détection comporte une caméra fixe (910), et
le second dispositif de détection comporte un capteur de poussière (920).

8. Système de surveillance à distance selon l'une quelconque des revendications 1 à 7, dans lequel
l'entraîneur d'état est configuré pour délivrer en sortie les informations calculées à l'estimateur d'états et au gestionnaire d'environnement.

9. Système de surveillance à distance selon la revendication 8, dans lequel le gestionnaire d'environnement (302) est configuré pour déterminer une précision d'estimation de l'état que l'estimateur d'états estime, sur la base des informations qui sont acquises auprès de l'entraîneur d'état et indique la précision d'estimation.

10. Système de surveillance à distance selon la revendication 8 ou 9, dans lequel l'entraîneur d'état est configuré pour délivrer en sortie les informations calculées indiquant la précision d'estimation à l'estimateur d'états et au gestionnaire d'environnement avant que la cible surveillée ne soit mise en fonctionnement.

11. Système de surveillance à distance selon l'une quelconque des revendications 8 à 10, dans lequel
l'entraîneur d'état est configuré pour délivrer en sortie les informations calculées indiquant la précision d'estimation à l'estimateur d'états et au gestionnaire d'environnement pendant que la cible surveillée est en fonctionnement.

12. Système de surveillance à distance selon la revendication 1, dans lequel
le comparateur d'états est configuré pour comparer les informations d'état avec les informations d'état estimées sur la base des informations environnementales.

13. Procédé de surveillance à distance pour détecter une anomalie dans un état d'une cible surveillée (102) configurée pour fonctionner de manière autonome, le procédé de surveillance à distance comprenant les étapes consistant à :
acquérir (S601) des informations d'état auprès de la cible surveillée, les informations d'état indiquant un état de la cible surveillée ;
acquérir (S602) des premières informations de détection auprès d'un premier dispositif de détection (103a ; 103 ; 710 ; 810 ; 910), les premières informations de détection indiquant un résultat de la détection de la cible surveillée ;
acquérir (S602) des secondes informations de détection auprès d'un second dispositif de détection (103b ; 720 ; 820 ; 920) différent du premier dispositif de détection, les secondes informations de détection étant différentes des premières informations de détection,
dans lequel le premier dispositif de détection et le second dispositif de détection sont agencés à l'extérieur de la cible surveillée et effectuent respectivement une détection de la cible surveillée,
estimer (S603) un premier état sur la base des premières informations de détection, le premier état étant l'état de la cible surveillée ;
estimer (S603) un second état sur la base des secondes informations de détection, le second état étant l'état de la cible surveillée ;
calculer des informations indiquant une précision d'estimation d'au moins l'un des premier état ou second état sur la base de l'état de la cible surveillée et du au moins l'un des premier état ou second état de la cible surveillée ;
gérer des informations environnementales reliant un environnement (501) dans lequel la détection de la cible surveillée est effectuée et une précision d'estimation (502) d'une position actuelle de la cible surveillée que l'estimateur d'états estime respectivement comme le premier état et comme le second état ;
déterminer un état entre le premier état et le second état en utilisant les informations environnementales, et délivrer en sortie l'état déterminé comme les informations d'état estimées ;
comparer (S605) les informations d'état avec les informations d'état estimées qui sont basées sur le premier état et le second état ; et
notifier (S606), à un dispositif de surveillance d'un système de surveillance à distance,
une occurrence d'une anomalie, sur la base d'un résultat de comparaison des informations d'état et des informations d'état estimées.

14. Programme, qui lorsqu'il est exécuté par un ordinateur, amène l'ordinateur à exécuter le procédé de surveillance à distance selon la revendication 13.
